# EUROPEAN PATENT APPLICATION

(11) **EP 4 718 252 A1**
(43) Date of publication of application: **01.04.2026**
(21) Application number: 24842248.7
(22) Date of filing: 09.07.2024
(51) Int. Cl.: G06F 9/50

(54) **MEMORY PAGE FAULT HANDLING METHOD AND SYSTEM**

(30) Priority: 19.07.2023 CN 202310890608
(71) Applicant: Cloud Intelligence Assets Holding (Singapore) Private Limited, Singapore 189554 (SG)
(72) Inventor: GUO, Kaijie, Hangzhou, Zhejiang 310024 (CN); LUO, Ben, Shanghai 200120 (CN); PENG, Kaihuan, Hangzhou, Zhejiang 310024 (CN)
(74) Representative: Novagraaf Technologies
(86) International application number: PCT/CN2024/104511
(87) International publication number: WO 2025/016253

(57) **Abstract**

Embodiments of the present disclosure provide a memory page fault handling method and system. The memory page fault handling method includes that a data processing device sends a page fault request to a page fault request handling device in response to determining that a memory page fault corresponding to an I/O access sent by a virtual machine occurs; the page fault request handling device sends a page fault message to a page fault exception queue based on the page fault request; a virtual machine manager obtains the page fault message from the page fault exception queue, performs page fault handling based on the page fault message to obtain a missing memory page, and sends the missing memory page to the page fault request handling device; and the page fault request handling device updates a mapping page table based on the missing memory page, so that the data processing device performs an I/O access operation according to an updated mapping page table.

## Description

### CROSS-REFERENCE TO RELATED APPLICATIONS

The present disclosure claims priority of Chinese Patent Application No. 202310890608.5, filed to China National Intellectual Property Administration on July 19, 2023 and titled "MEMORY PAGE FAULT HANDLING METHOD AND SYSTEM", the content of which is hereby incorporated by reference in its entirety.

### TECHNICAL FIELD

Embodiments of the present disclosure relate to the field of computer technologies, and in particular, to a memory page fault handling method.

### BACKGROUND OF THE INVENTION

In a virtual machine scenario for enabling a passthrough device (PASSTHROUGH), address translation needs to be performed in an IOMMU (Input/Output Memory Management Unit, input/output memory management unit). The IOMMU is connected with a direct memory access (DMA) I/O (Input/Output) bus and a memory of a host machine, to convert a virtual address for device access into a physical address.

During actual application, a virtual machine manager (VMM) recycles physical memory, stores data stored in the physical memory in a hard disk, and releases a physical memory page for other processes to use. When a process of an I/O access requires memory again, an I/O memory page fault (Page Fault) occurs.

An IOMMU of a mainstream CPU (Central Processing Unit) providing services on the market does not support an I/O page fault function. When an I/O memory page fault occurs, the IOMMU cannot directly send a page fault request to the VMM, but returns a page fault exception message to the passthrough device, such as, a PCI device. The passthrough device then relies on the IOMMU to send the page fault request to the VMM based on the page fault exception message, to restore the missing memory page, thereby increasing a processing link for recovery from the I/O memory page fault, requiring a long time for recovery from the I/O memory page fault, and causing a relatively large memory access delay of the passthrough device.

### SUMMARY OF THE INVENTION

In view of this, embodiments of the present disclosure provide a memory page fault handling method. At least one embodiment of the present disclosure relates to a memory page fault handling system, a page fault request handling device, a computing device, a computer-readable storage medium, and a computer program, to solve the technical deficiencies in the related art.

According to a first aspect of the embodiments of the present disclosure, a memory page fault handling method is provided, including the following steps.

A data processing device sends a page fault request to a page fault request handling device in response to determining that a memory page fault corresponding to an I/O access sent by the virtual machine occurs.

The page fault request handling device sends a page fault message to a page fault exception queue based on the page fault request.

The virtual machine manager obtains the page fault message from the page fault exception queue, performs page fault handling based on the page fault message to obtain a missing memory page, and sends a processing completion instruction for the missing memory page to the page fault request handling device.

The page fault request handling device updates a state table based on the processing completion instruction, so that the data processing device performs an I/O access operation according to an updated state table, where the state table includes a present state of the missing memory page.

According to a second aspect of the embodiments of the present disclosure, a memory page fault handling system is provided, including:
a data processing device, configured to send a page fault request to a page fault request handling device in response to determining that a memory page fault corresponding to an I/O access sent by a virtual machine occurs;
the page fault request handling device, configured to send a page fault message to a page fault exception queue based on the page fault request; and
a virtual machine manager, configured to obtain the page fault message from the page fault exception queue, perform page fault handling based on the page fault message to obtain a missing memory page, and send a processing completion instruction for the missing memory page to the page fault request handling device;
the page fault request handling device, configured to update a state table based on the processing completion instruction, so that the data processing device performs the I/O access operation according to the updated state table, where the state table includes a present state of the missing memory page.

According to a third aspect of the embodiments of the present disclosure, a page fault request handling device is provided, including a page fault message sending module and a state table update module;
the page fault message sending module, configured to send a page fault message to a page fault exception queue based on a page fault request, where the page fault message is sent by a data processing device when the data processing device determines that a memory page fault corresponding to an I/O access sent by a virtual machine occurs; and
the state table update module, configured to update a state table based on a processing completion instruction, so that the data processing device performs the I/O access operation according to the updated state table, where the processing completion instruction is sent when a virtual machine manager obtains the page fault message from the page fault exception queue and performs page fault handling based on the page fault message to obtain the missing memory page, and the state table includes a present state of the missing memory page.

According to a fourth aspect of the embodiments of the present disclosure, a computing device is provided, including:
a memory and a processor;
where the memory is configured to store computer-executable instructions, the processor is configured to execute the computer-executable instructions, and the computer-executable instructions, when executed by the processor, implement the steps of the memory page fault handling method.

According to a fifth aspect of the embodiments of the present disclosure, a computer-readable storage medium is provided, storing computer-executable instructions, the computer-executable instructions, when executed by a processor, implementing the steps of the memory page fault handling method.

According to a sixth aspect of the embodiments of the present disclosure, a computer program is provided, the computer program, when executed in a computer, causing the computer to perform the steps of the memory page fault handling method.

The memory page fault handling method provided in embodiments of the present disclosure is applied to a memory page fault handling system. The memory page fault handling system includes a host, a virtual machine and a virtual machine manager running on the host, a data processing device deployed on the host for processing the I/O access of the virtual machine, and a page fault request handling device deployed on the host for processing the page fault request sent by the data processing device. The data processing device sends the page fault request to the page fault request handling device in response to determining that a memory page fault corresponding to the I/O access sent by the virtual machine occurs. The page fault request handling device sends the page fault message to the page fault exception queue based on the page fault request. The virtual machine manager obtains the page fault message from the page fault exception queue, performs page fault handling based on the page fault message to obtain the missing memory page, and sends the processing completion instruction for the missing memory page to the page fault request handling device. The page fault request handling device updates the state table based on the processing completion instruction, so that the data processing device performs the I/O access operation according to the updated state table, where the state table includes the present state of the missing memory page.

Specifically, in the memory page fault handling method, the page fault request handling device is introduced into the data processing device, and when the data processing device sends the page fault request to the page fault request handling device, the page fault request handling device sends the page fault message to the virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

### BRIEF DESCRIPTION OF DRAWINGS

FIG. 1 is a schematic diagram of a scenario of a memory page fault handling method according to some embodiments of the present disclosure.
FIG. 2 is a flowchart of a memory page fault handling method according to some embodiments of the present disclosure.
FIG. 3 is a schematic diagram of a VPRI architecture in a DPU-assisted virtualization architecture to which a memory page fault handling method is applied according to some embodiments of the present disclosure.
FIG. 4 is a flowchart of a processing procedure of a memory page fault handling method according to some embodiments of the present disclosure.
FIG. 5 is a structural schematic diagram of a page fault request handling device according to some embodiments of the present disclosure.
FIG. 6 is a structural schematic diagram of a memory page fault handling system according to some embodiments of the present disclosure.
FIG. 7 is a structural block diagram of a computing device according to some embodiments of the present disclosure.

### DETAILED DESCRIPTION OF THE INVENTION

In the following description, many specific details are described to make the present disclosure fully comprehensible. However, the present disclosure can be implemented in other manners different from those described herein. A person having ordinary skill in the art can make similar extensions without contradicting the content of the present disclosure. Therefore, the protection scope of the present disclosure is not limited to specific implementations disclosed below.

The terms used in at least one embodiment of the present disclosure are for the purpose of describing particular embodiments and are not intended to limit at least one embodiment of the present disclosure. The terms "a", "said" and "the" of singular forms used in at least one embodiment and the appended claims of the present disclosure are also intended to include plural forms, unless otherwise specified in the context clearly. It should be further understood that the term "and/or" used in at least one embodiment of the present disclosure indicates and includes any or all possible combinations of one or more associated listed items.

It should be understood that although the terms "first", "second", and the like is used for describing various information in at least one embodiment of the present disclosure, such information should not be limited to these terms. These terms are used for distinguishing between information of the same type. For example, without departing from the scope of at least one embodiment of the present disclosure, "first" is also referred to as "second". Similarly, "second" is also referred to as "first". Depending on the context, for example, the term "if" used herein is interpreted as "while" or "when," or "in response to determining..."

In addition, it should be noted that all user information (including, but not limited to, user equipment information, and user personal information) and data (including, but not limited to, data set for analysis, stored data, and displayed data) in at least one embodiment of the present disclosure are information and data that are authorized by users or fully authorized by all parties. The collection, use, and processing of related data need to comply with applicable laws, regulations, and standards in relevant countries and regions, and corresponding operational entries are provided for users to choose whether to grant or deny authorization.

First, nouns and terms in at least one embodiment of the present disclosure are explained.

Direct Memory Access (DMA) is a function provided by some computer bus architectures, and enables data to be directly sent from a peripheral device (for example, a disk drive) to memory of a motherboard of a computer.

Address Translation Service (ATS) is an Address Translation Service mechanism. The ATS in the PCIe is centered on the CPU. Devices on the PCIe bus can apply to a host for information such as physical address mapping corresponding to an untranslated address and response attributes and permissions using an ATS mechanism.

I/O Page Fault (IOPF) is an I/O page fault request directly initiated by a PCI device.

Peripheral Component Interconnect (PCI) is a standard set to define a local bus.

PCI function is designed as a logical layer in each device.

Virtual Machine Monitor is the full name of VMM. A virtual machine monitoring system, also referred to as Hypervisor, is a specific implementation of a virtualization layer, and manages physical resources in a centralized manner. Each virtual processor system needs to access physical resources using the VMM.

Memory-mapped I/O (MMIO) is a part of the PCI specification.

Extended Message Signaled Interrupt (MSI-X) is an enhanced version of MSI interrupts. An MSI (Message Signaled Interrupt) triggers a DPU interrupt by writing a specific message to a specific address by a PCI device. An objective of the MSI-X interrupt mechanism is to extend the number of interrupt vectors used by a PCIe device, and resolve a problem that an MSI interrupt requires that use of interrupt vectors needs to be continuous.

Page Request Interface (PRI) is a standard PCI device Capability (PCI Capability) defined by a PCI-SIG. In combination with the ATS, I/O memory used by the device does not need to be fixed in memory, thereby relieving a bottleneck that a virtual machine occupies excessive fixed memory and reduces the overall allocable memory of a host.

For the technical problem that a long recovery time for an I/O memory page fault results in large memory access latency of a device, in some embodiments of the present disclosure, a bypass PCI Function for a page fault request service is added on a device side, to provide an IOPF function for a host of an IOMMU that does not have a PRI function, so as to implement recovery from a large block I/O memory page fault corresponding to bulk data. And the device can access a restored memory page. Compared with an existing memory page fault handling manner, a processing link for recovery from a memory page fault is shortened without relying on IOMMU hardware, which helps reduce duration of recovery from an I/O memory page fault, thereby reducing memory access latency of a device.

In the present disclosure, a memory page fault handling method is provided. The present disclosure further relates to a memory page fault handling system, a computing device, and a computer-readable storage medium, which are described in detail one by one in the following embodiments.

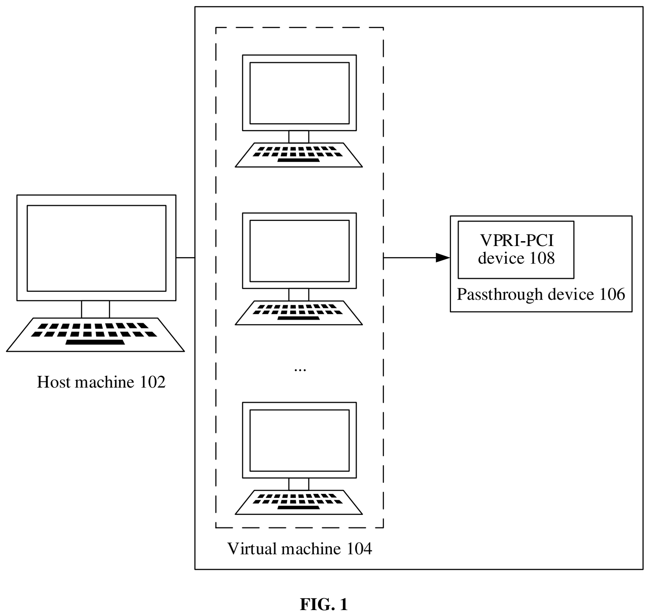

FIG. 1 is a schematic diagram of a scenario of a memory page fault handling method according to some embodiments of the present disclosure. The scenario includes a host machine 102, a virtual machine 104, a passthrough device 106, and a VPRI-PCI device 108.

The host machine 102 is understood as a computer device having computing, storage, communication, among other functions. For example, the host machine 102 is a server device. For example, the host machine 102 is a single server device, or is a cloud-based server array. Certainly, the host machine 102 is alternatively a mobile phone, a tablet computer, a personal computer, a wearable device, or another terminal device.

In some embodiments of the present disclosure, the virtual machine (VM) 104 is deployed on the host machine 102. The virtual machine 104 is also referred to as a guest (Guest) of the host machine 102. The virtual machine 104 has an independent CPU, memory, network, magnetic disk, and the like.

The passthrough device 106 is understood as an I/O hardware device mounted on the host machine 102, and includes a network interface card, a storage medium, and the like. The storage medium is a magnetic disk, a hard disk, or a persistent storage medium. The passthrough device 106 is connected with the host machine 102 by a communication interface. According to different forms of the communication interface, the passthrough device 106 is implemented as a PCI device, a PCIe device, or the like.

The VMM is understood as a logical node that manages the virtual machine 104, and is deployed on the host machine 102, or is deployed on another physical machine that communicates with the host machine 102. When the VMM is deployed on the host machine 102, the VMM runs on a processing unit of the host machine 102. The VMM performs task scheduling, load balancing, status monitoring, and the like on the virtual machine 104. The processing unit of the host machine 102 includes a CPU, a DPU, or the like.

In a passthrough technology, the virtual machine 104 directly accesses, through the VMM, a passthrough device 106 mounted on the host machine 102. In this way, an I/O operation path of the virtual machine 104 is almost the same as an I/O path in a non-virtualized environment. The passthrough device 106 accesses memory of the host machine 102 in a direct memory access (DMA) manner. For the DMA manner, a data path is provided between the passthrough device 106 and the memory of the host machine 102, to implement direct data transmission between the passthrough device 106 and the memory of the host machine 102. The CPU of the host machine 102 does not need to participate in a process of data transmission between the passthrough device 106 and the memory of the host machine 102.

In a virtualization technology, an operating system (guest OS) running on the virtual machine 104 usually does not know a physical memory address of a host machine accessed by the OS, and is also referred to as a host physical address (HPA), or a physical address for short. When a DMA operation needs to be performed, the memory is damaged. The passthrough device 106 learns a physical memory address of the virtual machine, which is briefly referred to as a virtual address (VA), or is also referred to as a guest physical address (GPA), but the passthrough device 106 does not know a mapping relationship between the GPA and the HPA. Therefore, in the embodiments of the present disclosure, an IOMMU is introduced into the passthrough technology.

The IOMMU is communicatively connected between the passthrough device 106 and the memory of the host machine 102. Optionally, the IOMMU is communicatively connected with the passthrough device 106 and the memory of the host machine 102 by a communication interface bus. The serial interface bus is a PCI interface bus, a PCIe interface bus, or the like. The IOMMU ensures that the passthrough device 106 accesses the memory of the host machine 102 when performing a DMA operation.

For the host machine 102 without the IOMMU, the passthrough device 106 accesses all memory address spaces of the host machine 102 in a DMA manner. For a host machine provided with the IOMMU, the CPU of the virtual machine 104 assigns a GPA accessible to the passthrough device 106, and the VMM assigns a HPA corresponding to the GPA. The IOMMU maintains a mapping table between the GPA and the HPA, and the mapping table is also referred to as a page table. The page table records a correspondence between the GPA and the HPA. When the passthrough device 106 accesses the memory of the host machine 102 in a DMA manner, the VMM captures a DMA request sent by the passthrough device 106, and transparently transmits the DMA request to the IOMMU. The IOMMU obtains a GPA to be accessed from the DMA request, and then the GPA to be accessed is matched in the page table stored in the IOMMU to obtain an HPA corresponding to the GPA to be accessed. For the passthrough device 106, a memory space corresponding to the memory of the host machine 102 is accessed through the HPA corresponding to the GPA to be accessed.

During actual application, the VMM recycles a physical memory, stores data stored in the physical memory in a hard disk, and releases a physical memory page for other processes to use. When a process of the passthrough device 106 requires memory again, an I/O memory page fault (Page Fault) occurs.

The memory page fault handling method provided in the embodiments of the present disclosure is described in detail by using an example in which the passthrough device 106 is a DPU.

In the embodiments of the present disclosure, a VPRI-PCI device 108 is introduced into the DPU. The VPRI-PCI device 108 is a bypass PCI Function independent of the DPU 106. The VPRI-PCI device is embedded in the passthrough device 106, or is connected with the passthrough device 106 through an interface. This is not limited in the present disclosure. The VPRI-PCI device 108 stores a present state of a memory page (4K/2M/1G) corresponding to the GPA, and one page records the present state of the page by using one bit. When the present state is "1", it indicates that the memory page corresponding to the GPA is present. When the present state is "0", it indicates that the memory page fault corresponding to the GPA occurs.

When the DPU finds, by searching a state table in the VPRI-PCI device 108 after the virtual machine 104 sends an I/O access to the DPU, that an I/O memory page fault is present, the DPU sends a page fault request to the VPRI-PCI device 108. The VPRI-PCI device 108 sends a page fault message to the VMM based on the page fault request, so that the VMM performs page fault handling based on the page fault message to obtain a missing memory page, and sends a processing completion instruction for the missing memory page to the VPRI-PCI device 108. The processing completion instruction is an instruction of a data transmission class, and is set to transfer a message that the missing memory page is obtained through page fault handling of the VMM, to update the state table in the VPRI-PCI device 108. The present state of the missing memory page in the state table before the page fault handling is 0, and the present state of the missing memory page in the state table after the handling is completed is 1, indicating that the missing memory page is obtained. The DPU performs the I/O access operation according to the updated state table.

Based on this, in the memory page fault handling method in the embodiments of the present disclosure, a page fault request handling device is introduced into a data processing device, and when the data processing device sends a page fault request to the page fault request handling device, the page fault request handling device sends a page fault message to a virtual machine manager based on the page fault request, which does not rely on an I/O page fault request interface of the IOMMU. In other words, when page fault handling needs to be performed, the IOMMU does not need to send the page fault message to the data processing device, and then the data processing device relies on the IOMMU to send the page fault request to perform page fault handling. The page fault request is directly sent by the page fault request handling device in the data processing device, thereby shortening a processing link for recovery from an I/O memory page fault, improving the processing efficiency of recovery from the I/O memory page fault, and reducing memory access latency of the device.

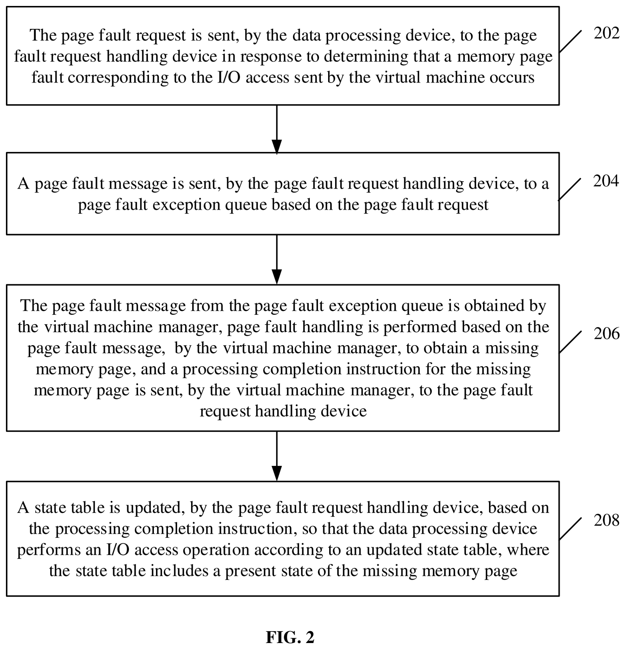

FIG. 2 is a flowchart of a memory page fault handling method according to some embodiments of the present disclosure. The memory page fault handling method is applied to a memory page fault handling system. The memory page fault handling system includes a host, a virtual machine and a virtual machine manager running on the host, a data processing device deployed on the host for processing an I/O access of the virtual machine, and a page fault request handling device deployed on the host for processing a page fault request sent by the data processing device. Specifically, the memory page fault handling method includes the following steps.

In step 202, the page fault request is sent, by the data processing device, to the page fault request handling device in response to determining that a memory page fault corresponding to the I/O access sent by the virtual machine occurs.

The data processing device is understood as the passthrough device 106 in FIG. 1, that is, a PCI I/O hardware device, for example, a standard network interface card NIC (Network Interface Card) or a data processing unit DPU (Data Processing Unit). The virtual machine is understood as a software implementation of a host machine that runs in the host machine and can run a program like a real machine. The I/O (Input/Output, which generally refers to input and output of data between an internal memory and an external memory or the other peripheral devices) access is understood as an input/output access. For example, when a virtual machine performs an I/O access to a magnetic disk, the I/O access is understood as a read/write access of the virtual machine to the magnetic disk.

The memory page is understood as dividing a physical memory space into spaces with a fixed size for storing physical addresses. The page fault request handling device is understood as the VPRI-PCI device 108 in FIG. 1. During actual application, the page fault request handling device is understood as a device sending a page fault request. The page fault request is understood as a page fault request for a memory page fault in the foregoing I/O access.

In at least one embodiment of the present disclosure, before determining that the memory page fault corresponding to the I/O access sent by the virtual machine occurs, the data processing device first needs to receive an I/O access, and one virtual machine sends a plurality of I/O accesses. To enable the data processing device to sequentially process the I/O accesses, the received I/O accesses are added to an I/O queue. To find whether a memory page fault occurs, first, a virtual address corresponding to an I/O access needs to be obtained, and whether a physical address corresponding to the virtual address is present can be found only after the virtual address is obtained. A specific implementation includes the following steps.

Before determining that the memory page fault corresponding to the I/O access sent by the virtual machine occurs, the memory page fault handling method further includes the following steps.

The I/O access sent by the virtual machine is received by the data processing device, the I/O access is added to an I/O queue, and a virtual address corresponding to the I/O access is determined.

The state table in the page fault request handling device is called to search for a present state of a memory page corresponding to the virtual address.

Correspondingly, determining that the memory page fault corresponding to the I/O access sent by the virtual machine occurs includes the following steps.

The memory page fault corresponding to the I/O access sent by the virtual machine occurs is determined by the data processing device based on the present state of the memory page.

The I/O queue is understood as a queue for storing the I/O access of one virtual machine, and follows the first-in-first-out principle. The state table is understood as a table that stores a present state of a memory page corresponding to a GPA. The virtual address is understood as the GPA. The memory page is understood as a physical address corresponding to the virtual address.

In the memory page fault handling method provided in the embodiments of the present disclosure, the data processing device adds the received I/O access to the I/O queue to process I/O access in order. In addition, the data processing device directly calls the state table in the page fault request handling device to check the present state of the memory page corresponding to the virtual address, thereby improving the efficiency of searching for a memory page fault.

In at least one embodiment of the present disclosure, before determining that the memory page fault corresponding to the I/O access sent by the virtual machine occurs, the virtual machine first needs to send the I/O access to determine an access object of the I/O access. The access object is located in the data processing device, and the access object of the virtual machine sending the I/O access is a data processing component in the data processing device to obtain data in the data processing component. A specific implementation includes the following steps.

The data processing device includes the data processing component. Correspondingly, before receiving the I/O access sent by the virtual machine, and determining the virtual address corresponding to the I/O access, the memory page fault handling method further includes the following steps.

The I/O access for the data processing component is sent, by the virtual machine, to the data processing device.

The data processing component is understood as a network device, a disk device, or the like in the data processing device, for example, virtio-net, rdma, virtio-blk, or NVMe.

In the memory page fault handling method provided in the embodiments of the present disclosure, data in the data processing component can be obtained by sending I/O access for the data processing component to the data processing device.

For ease of understanding, the following embodiments describe the memory page fault handling method provided in the embodiments of the present disclosure in detail by using an example in which the data processing device is a DPU, the page fault request handling device is a VPRI-PCI device, and the I/O access is a read/write access to a disk device virtio-blk.

The virtual machine sends a read/write access for a disk device virtio-blk in the DPU to the DPU. The DPU receives the I/O access sent by the virtual machine, adds the I/O access to an I/O queue corresponding to the virtual machine, and determines a virtual address corresponding to the I/O access. The DPU invokes a state table in the VPRI-PCI device to search for a present state of a memory page corresponding to the virtual address. When the present state of the corresponding memory page is "0", that is, when the DPU determines that the memory page fault corresponding to the I/O access sent by the virtual machine occurs, the DPU sends a page fault request to the VPRI-PCI device.

In at least one embodiment of the present disclosure, after it is determined that the memory page fault corresponding to the I/O access sent by the virtual machine occurs, other I/O accesses after the I/O access in the I/O queue need to be interrupted, so that an updated mapping page table is uniformly queried for subsequent other I/O accesses and the I/O access, thereby reducing a probability of the memory page fault of the other I/O accesses, and improving thread execution efficiency. A specific implementation includes the following steps.

After determining that the memory page fault corresponding to the I/O access sent by the virtual machine occurs, the memory page fault handling method further includes the following steps.

The processing of the I/O access in the I/O queue and processing of other I/O accesses in the I/O queue are interrupted by the page fault request handling device, where the other I/O accesses are located after the I/O access in the I/O queue.

During actual application, the processing of the I/O access in the I/O queue and the processing of other I/O accesses in the I/O queue are interrupted in an MSI-X interrupt manner of the VPRI-PCI device.

For example, when a memory page fault occurs in the read/write access to the disk device virtio-blk, the VPRI-PCI device interrupts the I/O queue in which the read/write access to the disk device virtio-blk is located, and suspends other I/O accesses that follow the read/write access in the I/O queue. When the disk device virtio-blk has a plurality of I/O queues, other queues in the disk device virtio-blk still continue to operate. Similarly, I/O access in an I/O queue of another device (for example, virtio-net) still continues to operate, and is not affected by a page fault state of the disk device virtio-blk (unless memory accessed by the current queue also encounters a page fault).

In the memory page fault handling method provided in the embodiments of the present disclosure, the page fault request handling device interrupts the processing of the I/O access in the I/O queue and the processing of other I/O accesses in the I/O queue, so that an updated mapping page table is uniformly queried for subsequent other I/O accesses and the I/O access, thereby reducing a probability of the memory page fault of the other I/O access, and improving thread execution efficiency.

In step 204, a page fault message is sent, by the page fault request handling device, to a page fault exception queue based on the page fault request.

The page fault message is understood as a message that corresponds to the page fault request and carries virtual address information corresponding to the missing memory page. The page fault exception queue is understood as a queue storing I/O access page fault messages of all virtual machines.

The foregoing example continues to be used. The page fault request handling device sends the page fault message to the page fault exception queue based on the page fault request. It is understood that the VPRI-PCI device sends the page fault message to the page fault exception queue based on the page fault request sent by the DPU, the page fault message carrying the virtual address information corresponding to the missing memory page.

In at least one embodiment of the present disclosure, the page fault message is sent to the page fault exception queue based on the page fault request. The page fault exception queue is a shared memory residing in memory of the host. The shared memory is understood as a large-capacity memory that can be accessed by different data processors in a multi-processor computer system. The shared memory is a high-speed communication channel between the VPRI-PCI device and a VMM, and can implement the completion of I/O page fault handling with minimum latency. A specific implementation includes the following steps.

An operation of sending the page fault message to the page fault exception queue based on the page fault request includes the following steps.

The page fault message is sent, by the page fault request handling device, to the page fault exception queue in a shared memory of the host based on the page fault request.

The foregoing example continues to be used. Sending, by the page fault request handling device, the page fault message to the page fault exception queue in a shared memory of the host based on the page fault request is understood as that the VPRI-PCI device sends the page fault message to the page fault exception queue in a shared memory of the host based on the page fault request.

In the memory page fault handling method provided in the embodiments of the present disclosure, the page fault message is sent to the page fault exception queue in a shared memory of the host, so that I/O page fault handling can be completed with minimum latency.

In step 206, the page fault message from the page fault exception queue is obtained by the virtual machine manager, page fault handling is performed based on the page fault message, by the virtual machine manager, to obtain a missing memory page, and a processing completion instruction for the missing memory page is sent, by the virtual machine manager, to the page fault request handling device.

The virtual machine manager is understood as the VMM in the foregoing embodiments. The page fault handling is understood as operations such as obtaining the virtual address from the page fault message and assigning the physical address to the virtual address. The processing completion instruction is understood as a completion instruction for assigning a corresponding physical address to the virtual address from the page fault message.

During specific implementation, the VMM obtains the page fault message from the page fault exception queue, performs page fault handling based on the virtual address in the page fault message, obtains the physical address corresponding to the virtual address in the page fault message, and sends the completion instruction of assigning the physical address to the virtual address in the page fault message to the VPRI-PCI device.

In at least one embodiment of the present disclosure, the virtual machine manager includes a page fault request handling driver corresponding to the page fault request handling device. The page fault request handling driver is a special program that can enable a computer and the page fault request handling device to communicate with each other, and is equivalent to a hardware interface. The page fault message is obtained from the page fault exception queue using the page fault request handling driver. A specific implementation includes the following steps.

The virtual machine manager includes the page fault request handling driver corresponding to the page fault request handling device; and correspondingly, an operation of obtaining the page fault message from the page fault exception queue includes the following steps.

The page fault message from the page fault exception queue is obtained, by the virtual machine manager, using the page fault request handling driver.

The page fault request handling driver is understood as that the page fault request handling driver corresponding to the page fault request handling device is present in the host. The page fault request handling driver is understood as an interface between the page fault request handling device and an operating system. The operating system controls the operation of the page fault request handling device by using the interface.

That is, after sending the page fault message to the page fault exception queue by the VPRI-PCI device, the page fault message sent by the VPRI-PCI device from the page fault exception queue is obtained by using a VPRI-PCI driver in the VMM that corresponds to the VPRI-PCI device.

In the memory page fault handling method provided in the embodiments of the present disclosure, the page fault message from the page fault exception queue is obtained using the page fault request handling driver, so that the VPRI-PCI device is connected with the operating system, thereby facilitating the control of the VPRI-PCI device by the operating system.

In at least one embodiment of the present disclosure, the virtual machine manager performs page fault handling, and the page fault handling is performed by using a memory management unit in the virtual machine manager. The memory management unit obtains a virtual address corresponding to the missing memory page from the page fault message, and assigns a physical address to the virtual address to obtain the missing memory page. A specific implementation includes the following steps.

An operation of performing page fault handling based on the page fault message to obtain the missing memory page includes the following steps.

The memory page corresponding to the virtual address is determined by the memory management unit in the virtual machine manager based on the virtual address corresponding to the missing memory page carried in the page fault message.

The memory management unit is understood as a software function unit that manages and allocates memory.

During actual application, the VMM restores the missing memory page based on the virtual address carried in the page fault message corresponding to the missing memory page by using the memory management unit in the VMM. Specifically, the memory management unit in the VMM assigns a physical address to the virtual address based on the virtual address carried in the page fault message corresponding to the missing memory page, obtains the memory page corresponding to the virtual address, and modifies an IOMMU page table of the virtual machine, to update a GPA memory mapping state of the virtual machine and the mapped physical address.

In the memory page fault handling method provided in the embodiments of the present disclosure, page fault handling is performed by using the memory management unit in the virtual machine manager, so that a proper physical address is assigned to the virtual address corresponding to the missing memory page carried in the page fault message using the memory management unit to obtain the memory page corresponding to the virtual address.

In step 208, a state table is updated, by the page fault request handling device, based on the processing completion instruction, so that the data processing device performs an I/O access operation according to an updated state table, where the state table includes a present state of the missing memory page.

The memory page fault handling method provided in the embodiments of the present disclosure is described in detail still by using an example in which the page fault request handling device is a VPRI-PCI device.

Updating, by the page fault request handling device, the state table based on the processing completion instruction, so that the data processing device performs the I/O access operation according to the updated state table is understood as that the VMM sends the processing completion instruction to the VPRI-PCI device after obtaining the missing memory page. The VPRI-PCI device updates the state table after receiving the processing completion instruction, for example, sets a state corresponding to the missing memory page to "1" to indicate that the memory page is present. The DPU performs the foregoing I/O access operation of the virtual machine according to the updated state table.

In at least one embodiment of the present disclosure, after completing the update of the state table, the page fault request handling device sends a processing completion notification to the data processing device, so that the data processing device rapidly processes I/O access from the I/O queue based on the processing completion notification. A specific implementation includes the following steps.

An operation of updating the state table based on the processing completion instruction, so that the data processing device performs the I/O access operation according to the updated state table includes the following steps.

The state table is updated, by the page fault request handling device, based on the processing completion instruction, and an update completion instruction for the updated state table is sent to the data processing device by the page fault request handling device, and in response to the update completion instruction, the I/O access operation is performed by the data processing device according to the updated state table.

During actual application, the VPRI-PCI device updates the state table in the VPRI-PCI device based on the processing completion instruction obtained from the VMM, and sends the update completion instruction to the DPU. **In** response to the update completion instruction, the DPU performs the I/O access operation according to the updated state table.

In the memory page fault handling method provided in the embodiments of the present disclosure, after completing the update of the state table, the page fault request handling device sends an update completion instruction to the data processing device, and the data processing device receives the update completion instruction and rapidly processes the I/O access from the I/O queue based on the update completion instruction.

In at least one embodiment of the present disclosure, at least one virtual machine is provided. When a plurality of virtual machines are provided, page fault requests corresponding to I/O accesses sent by the plurality of virtual machines are concurrently processed, to implement more efficient memory page fault handling. A specific implementation includes the following steps.

The page fault handling system comprises at least two virtual machines. Correspondingly, an operation of sending the page fault message to the page fault exception queue based on the page fault request includes the following steps.

At least two page fault messages are sent, by the page fault request handling device, to the page fault exception queue based on at least two page fault requests, where the at least two page fault requests are sent to the page fault request handling device when the data processing device determines that memory pages corresponding to I/O accesses sent by the at least two virtual machines are all missing.

Correspondingly, obtaining the page fault message from the page fault exception queue, performing page fault handling based on the page fault message to obtain the missing memory page, and sending a processing completion instruction for the missing memory page to the page fault request handling device includes the following steps.

The at least two page fault messages from the page fault exception queue is obtained by the virtual machine manager, page fault handling is performed, by the virtual machine manager, based on the at least two page fault messages to obtain at least two missing memory pages, and the processing completion instruction for the at least two missing memory pages is sent to the page fault request handling device by the virtual machine manager.

Correspondingly, updating the state table based on the processing completion instruction, so that the data processing device performs the I/O access operation according to the updated state table includes the following steps.
at least two state tables are updated, by the page fault request handling device, based on the processing completion instruction, so that the data processing device performs at least two I/O access operations according to at least two updated state tables, where the state tables include present states of the at least two missing memory pages.

During actual application, two virtual machines, namely, a virtual machine A and a virtual machine B, are provided. An example in which I/O accesses are a read/write access of the virtual machine A to a magnetic disk A and a read/write access of the virtual machine B to a magnetic disk B is used for detailed description.

In response to determining that memory pages corresponding to the read/write access A and the read/write access B that are sent by the virtual machine A and the virtual machine B are both missing, the DPU sends a page fault request A and a page fault request B to the VPRI-PCI device. The VPRI-PCI device sends a page fault message A and a page fault message B to the page fault exception queue based on the page fault request A and the page fault request B.

The VMM obtains the page fault message A and the page fault message B from the page fault exception queue, performs page fault handling based on the two page fault messages, to obtain a missing memory page A corresponding to the page fault message A and a missing memory page B corresponding to the page fault message B, and sends processing completion instructions for the missing memory page A and the missing memory page B to the VPRI-PCI device.

The VPRI-PCI device updates a state of the missing memory page A in a state table A corresponding to the virtual machine A and updates a state of the missing memory page B in a state table B corresponding to the virtual machine B based on the processing completion instructions, so that the DPU processes the read/write access A and the read/write access B according to the updated state table A and the updated state table B.

**In** the memory page fault handling method provided in the embodiments of the present disclosure, when a plurality of virtual machines are provided, page fault requests corresponding to I/O accesses sent by the plurality of virtual machines are processed, to implement more efficient memory page fault handling.

In at least one embodiment of the present disclosure, when a plurality of virtual machines are provided, after a plurality of missing memory pages corresponding to the plurality of virtual machines are obtained, state tables corresponding to the virtual machines are updated, and after update is completed, corresponding update completion instructions are sent to the data processing device out-of-order by using a page fault request handling interface, so that the data processing device rapidly processes I/O accesses corresponding to the plurality of virtual machines. A specific implementation includes the following steps.

The page fault request handling device includes a page fault request handling interface.

Correspondingly, updating the at least two state tables based on the processing completion instruction, so that the data processing device performs at least two I/O access operations according to at least two updated state tables includes the following steps.

The at least two state tables are updated, by the page fault request handling device, based on the processing completion instruction, and at least two update completion instructions for the at least two updated state tables are sent to the data processing device, by the page fault request handling device, using the page fault request handling interface.

In response to the at least two update completion instructions, the at least two I/O access operations are performed according to the at least two updated state tables by the data processing device.

The page fault request handling interface is understood as a page response interface. The page response interface is configured to send the update completion instruction to the data processing device.

Specifically, the foregoing example continues to be used. After updating the state table A based on the processing completion instruction for the missing memory page A and updating the state table B based on the processing completion instruction for the missing memory page B, the VPRI-PCI device sends an update completion instruction A corresponding to the updated state table A and an update completion instruction B corresponding to the updated state table B to the DPU using the page response interface of the VPRI-PCI device. In response to the update completion instruction A and the update completion instruction B, the DPU performs the read/write access processing A and the read/write access processing B according to the updated state table A and the updated state table B.

During actual application, the page response interface of the VPRI-PCI device sends the update completion instruction A corresponding to the updated state table A and the update completion instruction B corresponding to the updated state table B out-of-order, and the update completion instructions do not need to be sent in the order of being taken out of the page fault exception queue, thereby improving processing efficiency.

In the memory page fault handling method provided in the embodiments of the present disclosure, corresponding update completion instructions are sent to the data processing device out-of-order using the page fault request handling interface, so that the data processing device rapidly performs the plurality of I/O access operations corresponding to the plurality of virtual machines.

Based on this, in the memory page fault handling method provided in the embodiments of the present disclosure, the page fault request handling device is introduced into the data processing device, and when the data processing device sends a page fault request to the page fault request handling device, the page fault request handling device sends a page fault message to the virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

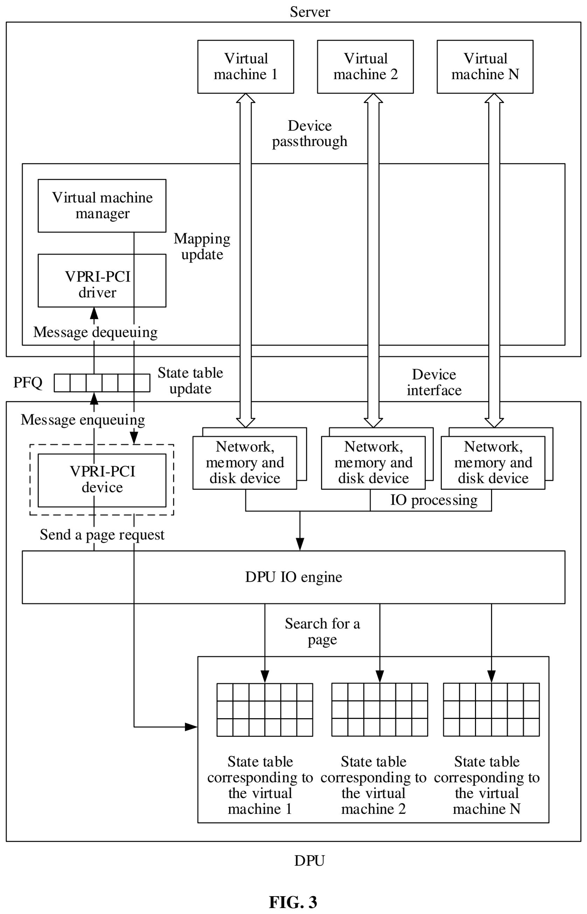

FIG. 3 is a schematic diagram of a VPRI architecture in a DPU-assisted virtualization architecture to which a memory page fault handling method is applied according to some embodiments of the present disclosure. Description is provided below with reference to specific embodiments.

The FIG. 3 shows a VPRI architecture under a DPU-assisted virtualization architecture to which a memory page fault handling method is applied. The VPRI architecture specifically includes a server and a DPU. The server includes a host, a plurality of virtual machines, for example, a virtual machine 1, a virtual machine 2..., and a virtual machine N, running on the host, and a virtual machine manager running on the host. The virtual machine manager is connected with the DPU by a device interface. The DPU includes a DPU I/O engine, a VPRI-PCI device, and some other PCI devices such as a network, a memory, and a disk device.

The VPRI architecture has an independent PCI function, that is, a VPRI-PCI device. The VPRI-PCI device is one of PCI devices provided or simulated by the DPU for all other networks and storage PCI devices, and the VPRI-PCI device is independent of any other PCI device on the DPU.

However, I/O engines behind other PCI devices depend on the VPRI-PCI device to detect a page presence attribute of the memory page. The VPRI-PCI device provides a method for detecting whether a page of a memory page is mapped. For example, the VPRI-PCI device stores state tables, for example, a state table corresponding to the virtual machine 1, a state table corresponding to the virtual machine 2..., and a state table corresponding to the virtual machine N, storing mapped present states (mapped/unmapped) of each memory page of each virtual machine. Therefore, before performing DMA, all other PCI devices need to first determine, by using page mapping information in a state table in the VPRI-PCI device, whether memory to be accessed is in a page fault state. It should be noted that the VPRI-PCI device sends an IOPF message to the virtual machine manager.

The VPRI-PCI device provides an MMIO device interface and a standard MSI-X interrupt. MMIO is understood as a register of the PCI device, which is used by a CPU of a host end to access the PCI device in a memory mapping manner. On these basic PCI models, the negotiation of an IOPF shared memory queue between the virtual machine manager and the VPRI-PCI device is implemented. The IOPF shared memory queue is referred to as a Page Fault Queue (PFQ), that is, a page fault exception queue in the foregoing embodiments. The PFQ is understood as a shared memory that resides in the memory of the host. The PFQ paired with the MSI-X interrupt is understood as a high-speed communication channel between the VPRI-PCI device and the VMM, which can implement the completion of I/O page fault handling with minimum latency.

Specifically, the virtual machine directly accesses the PCI devices in the DPU in a device passthrough manner. For example, the virtual machine 1 directly accesses a network, a memory, and a disk device corresponding to the virtual machine 1 in the DPU. When the virtual machine 1 performs I/O accesses to these PCI devices, these PCI devices perform I/O processing, that is, invoke, by using a DPU I/O engine, the state table corresponding to the virtual machine 1 in the VPRI-PCI device to search for a page. When it is determined that a memory page corresponding to the I/O access sent by the virtual machine 1 is missing, the DPU I/O engine sends the page request to the VPRI-PCI device. The VPRI-PCI device enqueues the page fault message from the page request to the PFQ. The VPRI-PCI driver corresponding to the VPRI-PCI device extracts the page fault message from the PFQ to dequeue the message, and sends the page fault message to the virtual machine manager. Page fault handling is performed in the virtual machine manager to obtain the missing memory page, perform mapping update, and complete the update of the state table.

Based on this, in the memory page fault handling method provided in the embodiments of the present disclosure, a bypass Function independent of the DPU is added to the DPU, and when a memory page fault occurs, a page fault message is sent based on the bypass Function, to provide a PRI request service without relying on a bypass PCI Function of an IOMMU PRI, shorten a processing link for recovery from an I/O memory page fault, improve the processing efficiency of recovery from the I/O memory page fault, and reduce memory access latency of the device.

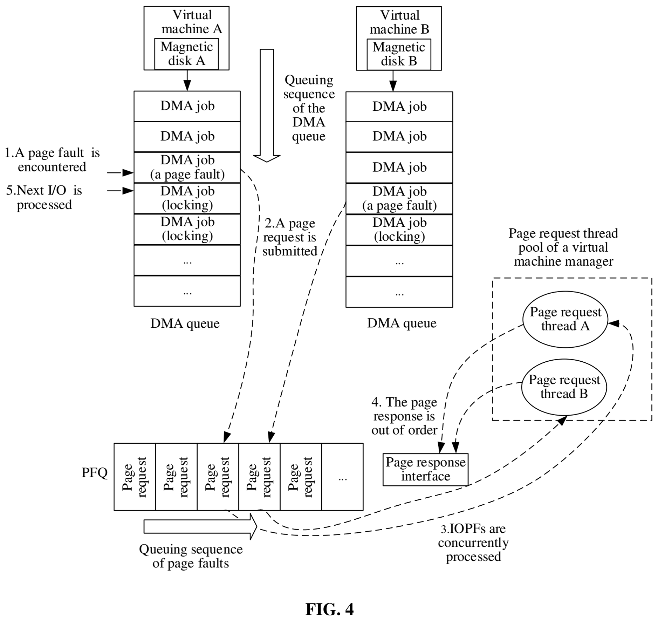

FIG. 4 is a flowchart of a processing procedure of a memory page fault handling method according to some embodiments of the present disclosure.

Based on the architecture in FIG. 3, for the memory page fault handling method, a specific processing process in a case of a memory page fault corresponding to an I/O access of a virtual machine is described in detail.

A virtual machine A and a virtual machine B in FIG. 4 are replaced with the virtual machine 1 and the virtual machine 2 in FIG. 3. In a case in which the virtual machine A performs a read/write access processing to a magnetic disk A in a DMA manner, and the virtual machine B performs a read/write access processing to a magnetic disk B in a DMA manner, a DMA job is understood as an I/O request in the foregoing embodiments. A DMA queue is understood as an I/O queue in the foregoing embodiments.

In step 1, a page fault is encountered.

When an DPU I/O engine identifies, in some manners (for example, ATS translation, or page table mirroring on a device), that an I/O request of one of the I/O queues (for example, virtio-net, virtio-blk, NVMe, and RDMA) encounters a page fault, for example, a page fault occurs on a DMA job in a DMA queue corresponding to the virtual machine A and a page fault occurs on a DMA job in a DMA queue corresponding to the virtual machine B in FIG. 4. "encountering a page fault" means that a memory page corresponding to an I/O access sent by the virtual machine in the foregoing embodiment is missing.

Specifically, an I/O engine of the DPU is used to identify that an I/O request of an I/O queue encounters a page fault.

In step 2, a page request is submitted.

The page request is understood as the page fault request in the foregoing embodiments.

When a page fault is encountered, the I/O engine generates an IOPF message once, sends the IOPF message to a PFQ queue, and interrupts I/O processing by using a VPRI-PCI device. According to a queuing sequence of the DMA queue, a DMA job below a DMA job in which a page fault occurs is locked.

Specifically, to ensure the semantic consistency of an I/O queue, before the processing of a page fault is completed, the processing of an I/O queue encountering an IOPF is stopped, and the I/O engine pauses only an I/O queue in which an IOPF occurs, and other I/O queues are not affected.

For specific implementations, refer to the foregoing embodiments. Details are not described herein again.

In step 3, IOPFs are concurrently processed.

Specifically, for the queuing sequence of page faults, the IOPFs are concurrently processed. a page request A corresponding to the virtual machine A and a page request B corresponding to the virtual machine B in a page request thread pool of a virtual machine manager are simultaneously processed, the page request A appearing on the virtual machine A is processed in a page request thread A, and the page request B appearing on the virtual machine B is processed in a page request thread B.

In step 4, the page response is out of order.

The page response is understood as an update completion instruction in the foregoing embodiments.

Specifically, a page response interface provided by the VPRI-PCI device processes out-of-order IOPF completion events, to ensure that blocking and interference do not occur between virtual machines.

For specific implementations, refer to the foregoing embodiments. Details are not described herein again.

In step 5, next I/O is processed.

After an I/O access in which a page fault occurs is completed, the interrupt of the I/O queue is released, and next I/O continues to be processed according to the queuing sequence of the I/O queue.

For specific implementations, refer to the foregoing embodiments. Details are not described herein again.

In the memory page fault handling method provided in the embodiments of the present disclosure, the page fault request handling device is introduced into the data processing device, and when the data processing device sends a page fault request to the page fault request handling device, the page fault request handling device sends a page fault message to the virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

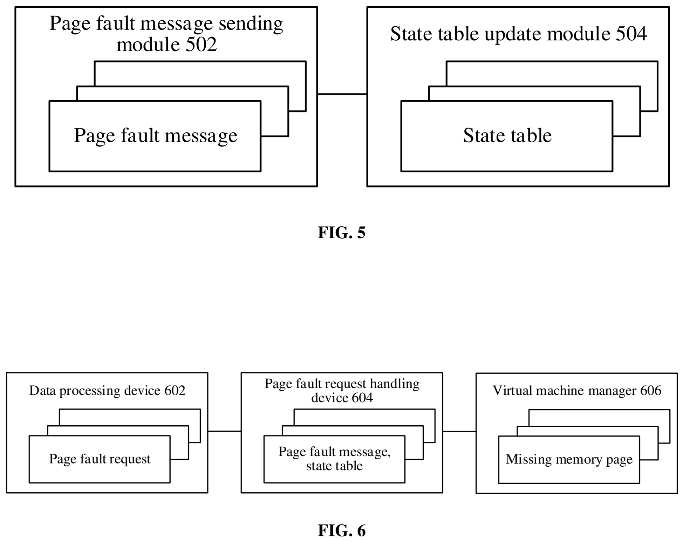

FIG. 5 is a structural schematic diagram of a page fault request handling device according to some embodiments of the present disclosure. As shown in FIG. 5, the apparatus includes a page fault message sending module 502 and a state table update module 504.

The page fault message sending module 502 is configured to send a page fault message to a page fault exception queue based on a page fault request, where the page fault message is sent by a data processing device when the data processing device determines that a memory page fault corresponding to an I/O access sent by a virtual machine occurs.

The state table update module 504 is configured to update a state table based on a processing completion instruction, so that the data processing device performs the I/O access operation according to the updated state table, where the processing completion instruction is sent when a virtual machine manager obtains the page fault message from the page fault exception queue and performs page fault handling based on the page fault message to obtain the missing memory page, and the state table includes a present state of the missing memory page.

Specifically, the page fault request handling device sends a page fault message to the virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

Corresponding to the foregoing method embodiments, the present disclosure further provides some embodiments of a memory page fault handling system. FIG. 6 is a structural schematic diagram of a memory page fault handling system according to some embodiments of the present disclosure. As shown in FIG. 6, the system includes a data processing device 602, a page fault request handling device 604, and a virtual machine manager 606.

The data processing device 602 is configured to send a page fault request to a page fault request handling device in response to determining that a memory page fault corresponding to an I/O access sent by a virtual machine occurs.

The page fault request handling device 604 is configured to send a page fault message to a page fault exception queue based on the page fault request.

The virtual machine manager 606 is configured to obtain the page fault message from the page fault exception queue, perform page fault handling based on the page fault message to obtain a missing memory page, and send a processing completion instruction for the missing memory page to the page fault request handling device.

The page fault request handling device 604 is configured to update a state table based on the processing completion instruction, so that the data processing device performs the I/O access operation according to the updated state table, where the state table includes a present state of the missing memory page.

Optionally, the data processing device 602 is further configured to receive the I/O access sent by the virtual machine, add the I/O access to an I/O queue, and determine a virtual address corresponding to the I/O access.

Optionally, the data processing device 602 is further configured to call the state table in the page fault request handling device, and search for the present state of the memory page corresponding to the virtual address.

Optionally, the data processing device 602 is further configured to determine, based on the present state of the memory page, that the memory page fault corresponding to the I/O access sent by the virtual machine occurs.

Optionally, the memory page fault handling system further includes the virtual machine, which is configured to send an I/O access for the data processing component to the data processing device.

Optionally, the page fault request handling device 604 is further configured to interrupt the processing of the I/O access in the I/O queue and processing of other I/O accesses in the I/O queue, where the other I/O accesses are located after the I/O access in the I/O queue.

Optionally, the virtual machine manager 606 is further configured to obtain the page fault message from the page fault exception queue using the page fault request handling driver.

Optionally, the virtual machine manager 606 is further configured to determine, based on the virtual address that corresponds to the missing memory page and that is carried in the page fault message, the memory page corresponding to the virtual address.

Optionally, the page fault request handling device 604 is further configured to update the state table based on the processing completion instruction, and send an update completion instruction for the updated state table to the data processing device.

Optionally, the page fault request handling device 604 is further configured to process, in response to the update completion instruction, the I/O access according to the updated state table using the data processing device.

Optionally, the memory page fault handling system is further configured to send at least two page fault messages to the page fault exception queue based on at least two page fault requests using the page fault request handling device, where the at least two page fault requests are sent to the page fault request handling device when the data processing device determines that memory pages corresponding to I/O accesses sent by the at least two virtual machines are all missing.

Optionally, the memory page fault handling system is further configured to obtain the at least two page fault messages from the page fault exception queue by the virtual machine manager, perform page fault handling based on the at least two page fault messages to obtain at least two missing memory pages by the virtual machine manager, and send the processing completion instruction for the at least two missing memory pages to the page fault request handling device by the virtual machine manager.

Optionally, the memory page fault handling system is further configured to update at least two state tables based on the processing completion instruction by the page fault request handling device, so that the data processing device performs at least two I/O access operations according to at least two updated state tables, where the state tables include present states of the at least two missing memory pages.

Optionally, the memory page fault handling system is further configured to update at least two state tables based on the processing completion instruction by the page fault request handling device, and send, to the data processing device by using the page fault request handling interface, at least two update completion instructions for the at least two updated state tables.

Optionally, the memory page fault handling system is further configured to perform, in response to the at least two update completion instructions, the at least two I/O access operations according to the at least two updated state tables by the data processing device.

Optionally, the page fault request handling device 604 is further configured to send the page fault message to the page fault exception queue of shared memory in memory of the host based on the page fault request.

Specifically, for the memory page fault handling system, the page fault request handling device is introduced into the data processing device, and when the data processing device sends a page fault request to the page fault request handling device, the page fault request handling device sends a page fault message to the virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

The foregoing is a schematic solution of a memory page fault handling system in some embodiments. It should be noted that the technical solution of the memory page fault handling system is based on the same concept as the foregoing technical solution of the memory page fault handling system. For details that are not described in detail in the technical solution of the memory page fault handling system, refer to the description of the technical solution of the foregoing memory page fault handling method.

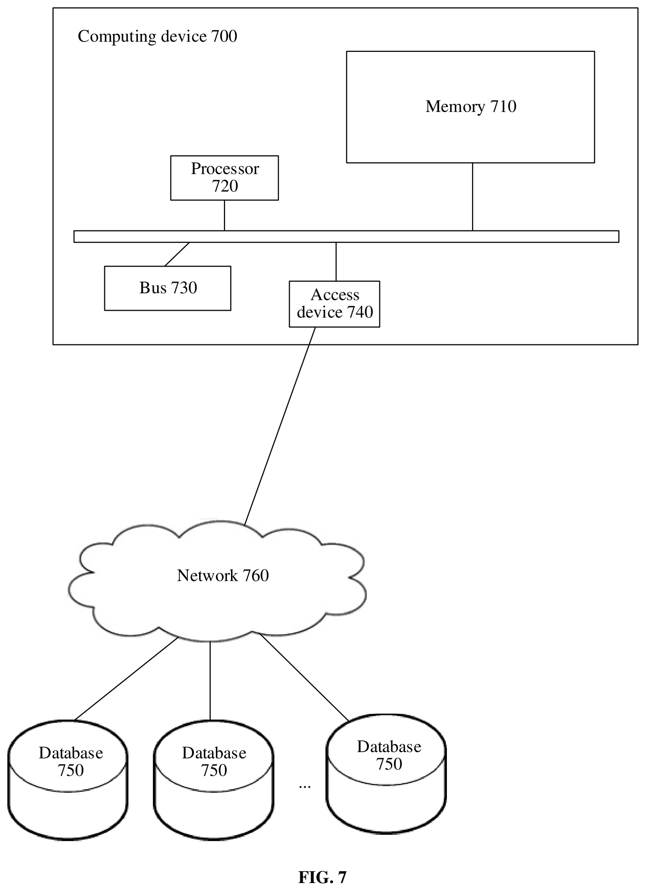

FIG. 7 is a structural block diagram of a computing device 700 according to some embodiments of the present disclosure. The computing device 700 includes, but not limited to, a memory 710 and a processor 720. The processor 720 is connected with the memory 710 by a bus 730. A database 750 is configured to store data.

The computing device 700 further includes an access device 740. The access device 740 enables the computing device 700 to communicate via at least one network 760. For example, at least one network includes a Public Switched Telephone Network (PSTN), a Local Area Network (LAN), a Wide Area Network (WAN), a Personal Area Network (PAN), or a combination of communication networks such as the Internet. The access device 740 includes at least one of any type of network interface (for example, a network interface controller (NIC)) that is wired or wireless, such as an IEEE802.11 Wireless Local Area Network (WLAN) wireless interface, a Worldwide Interoperability for Microwave Access (Wi-MAX) interface, an Ethernet interface, a Universal Serial Bus (USB) interface, a cellular network interface, a Bluetooth interface, and a Near Field Communication (NFC).

In some embodiments of the present disclosure, the above components of the computing device 700 and other components not shown in FIG. 7 is connected with each other, for example, by a bus. It should be understood that the structural block diagram of the computing device shown in FIG. 7 is for exemplary purposes and does not constitute a limitation to the scope of the present disclosure. A person having ordinary skill in the art can add or replace other components as required.

The computing device 700 is any type of stationary or mobile computing device, including a mobile computer or mobile computing device (for example, a tablet computer, a personal digital assistant, a laptop computer, a netbook, etc.), a mobile phone (for example, a smartphone), a wearable computing device (for example, a smartwatch, and smart glasses), or another type of mobile device, or a stationary computing device such as a desktop computer or a personal computer (PC). The computing device 700 is a mobile or stationary server.

The processor 720 is configured to execute the following computer-executable instructions. The computer-executable instructions, when executed by the processor, implementing the steps of the foregoing memory page fault handling method.

The foregoing is a schematic solution of the computing device in the embodiments. It should be noted that the technical solution of the computing device is based on the same concept as the foregoing technical solution of the memory page fault method. For details that are not described in detail in the technical solution of the computing device, refer to the description of the technical solution of the foregoing memory page fault method.

Some embodiments of the present disclosure further provide a computer-readable storage medium, storing computer-executable instructions, the computer-executable instructions, when executed by a processor, implementing the steps of the foregoing memory page fault method.

The foregoing is a schematic solution of a computer-readable storage medium in the embodiments. It should be noted that the technical solution of the storage medium is based on the same concept as the foregoing technical solution of the memory page fault method. For details that are not described in detail in the technical solution of the storage medium, refer to the description of the technical solution of the foregoing memory page fault method.

Some embodiments of the present disclosure further provide a computer program, the computer program, when executed in a computer, causing the computer to perform the steps of the foregoing memory page fault method.

The foregoing is a schematic solution of the computer program in the embodiments. It should be noted that the technical solution of the computer program is based on the same concept as the foregoing technical solution of the memory page fault method. For details that are not described in detail in the technical solution of the computer program, refer to the description of the technical solution of the foregoing memory page fault method.

Specific embodiments of the present disclosure are described above. Other embodiments fall within the scope of the appended claims. In some cases, the actions or steps recorded in the claims are performed in sequences different from those in the embodiments and an expected result can still be achieved. In addition, the processes depicted in the accompanying drawings are not necessarily performed in the specific order or successively to achieve an expected result. In some implementations, multitasking and parallel processing are feasible or beneficial.

The computer instructions include computer program codes. The computer program codes are in the form of source code, in the form of object code, in the form of an executable file, in some intermediate forms, or the like. The computer-readable medium includes: any entity or apparatus capable of carrying the computer program code, a recording medium, a USB flash drive, a removable hard drive, a disk, an optical disc, a computer memory, a read-only memory (ROM), a random access memory (RAM), an electrical carrier signal, a telecommunication signal, and a software distribution medium, or the like. It should be noted that the content contained in the computer-readable medium is added or omitted as appropriate according to the requirements of patent practice in the jurisdiction. For example, in some districts, according to patent practice, the computer-readable medium does not include an electric carrier signal and a telecommunication signal.

It should be noted that the foregoing method embodiments are presented as a series of actions for simplicity of description, but a person having ordinary skill in the art should be aware that the embodiments of the present disclosure are not limited by the sequence of actions described, as some steps are performed in other sequences or simultaneously according to the embodiments of the present disclosure. Secondly, a person having ordinary skill in the art should also be aware that the embodiments described in the embodiments of the present disclosure are all exemplary embodiments and that the actions and modules involved are not necessarily essential for the embodiments of the present disclosure.

In the foregoing embodiments, the description of each embodiment has its own focus, and for what is not described in detail in some embodiments, refers to related description in other embodiments.

The exemplary embodiments of the present disclosure disclosed above are used for helping explain the present disclosure. The optional embodiments do not describe all details in detail, and do not limit the present disclosure to specific implementations. Obviously, many modifications and variations can be made based on the content of the embodiments of the present disclosure. In the present disclosure, these embodiments are selected and described in detail to better explain the principle and the practical application of the embodiments of the present disclosure, so that a person having ordinary skill in the art can understand and use the present disclosure well. The present disclosure is subject to the claims and the entire scope and all equivalents thereof.

### Industrial Applicability

Embodiments of the present disclosure provide a memory page fault handling method and system. In the memory page fault handling method, a page fault request handling device is introduced into a data processing device, and when the data processing device sends a page fault request to the page fault request handling device, the page fault request handling device sends a page fault message to a virtual machine manager based on the page fault request, which does not rely on an I/O page fault request interface of an IOMMU, thereby shortening a processing link for recovery from an I/O memory page fault, improving the processing efficiency of recovery from the I/O memory page fault, and reducing memory access latency of the device.

## Claims

1. A memory page fault handling method, applied to a memory page fault handling system, wherein the memory page fault handling system comprises a host, a virtual machine and a virtual machine manager running on the host, a data processing device deployed on the host for processing an I/O access of the virtual machine, and a page fault request handling device deployed on the host for processing a page fault request sent by the data processing device, the memory page fault handling method comprises:
sending, by the data processing device, the page fault request to the page fault request handling device in response to determining that a memory page fault corresponding to the I/O access sent by the virtual machine occurs;
sending, by the page fault request handling device, a page fault message to a page fault exception queue based on the page fault request;
obtaining, by the virtual machine manager, the page fault message from the page fault exception queue, performing, by the virtual machine manager, page fault handling based on the page fault message to obtain a missing memory page, and sending, by the virtual machine manager, a processing completion instruction for the missing memory page to the page fault request handling device; and
updating, by the page fault request handling device, a state table based on the processing completion instruction, so that the data processing device performs an I/O access operation according to an updated state table, wherein the state table comprises a present state of the missing memory page.

2. The memory page fault handling method according to claim 1, before determining that the memory page fault corresponding to the I/O access sent by the virtual machine occurs, further comprising:
receiving, by the data processing device, the I/O access sent by the virtual machine, adding, by the data processing device, the I/O access to an I/O queue, and determining, by the data processing device, a virtual address corresponding to the I/O access; and
calling the state table in the page fault request handling device to search for a present state of a memory page corresponding to the virtual address; and
correspondingly, determining that the memory page fault corresponding to the I/O access sent by the virtual machine occurs comprises:
determining, by the data processing device based on the present state of the memory page, that the memory page fault corresponding to the I/O access sent by the virtual machine occurs.

3. The memory page fault handling method according to claim 2, wherein the data processing device comprises a data processing component; and
correspondingly, before receiving the I/O access sent by the virtual machine, and determining the virtual address corresponding to the I/O access, the memory page fault handling method further comprises:
sending, by the virtual machine, an I/O access for the data processing component to the data processing device.

4. The memory page fault handling method according to claim 2, after determining that the memory page fault corresponding to the I/O access sent by the virtual machine occurs, further comprising:
interrupting, by the page fault request handling device, processing of the I/O access in the I/O queue and processing of other I/O accesses in the I/O queue, wherein the other I/O accesses are located after the I/O access in the I/O queue.

5. The memory page fault handling method according to claim 1, wherein the virtual machine manager comprises a page fault request handling driver corresponding to the page fault request handling device; and
correspondingly, obtaining the page fault message from the page fault exception queue comprises:
obtaining, by the virtual machine manager, the page fault message from the page fault exception queue using the page fault request handling driver.

6. The memory page fault handling method according to claim 1, wherein performing page fault handling based on the page fault message to obtain the missing memory page comprises:
determining, by a memory management unit in the virtual machine manager based on the virtual address corresponding to the missing memory page carried in the page fault message, the memory page corresponding to the virtual address.

7. The memory page fault handling method according to claim 2, wherein updating the state table based on the processing completion instruction, so that the data processing device performs the I/O access operation according to the updated state table comprises:
updating, by the page fault request handling device, the state table based on the processing completion instruction, and sending, by the page fault request handling device, an update completion instruction for the updated state table to the data processing device; and
performing, by the data processing device in response to the update completion instruction, the I/O access operation according to the updated state table.

8. The memory page fault handling method according to claim 1, wherein the page fault handling system comprises: at least two virtual machines;
correspondingly, sending the page fault message to the page fault exception queue based on the page fault request comprises:
sending, by the page fault request handling device, at least two page fault messages to the page fault exception queue based on at least two page fault requests, wherein the at least two page fault requests are sent to the page fault request handling device when the data processing device determines that memory pages corresponding to I/O accesses sent by the at least two virtual machines are all missing; and
correspondingly, obtaining the page fault message from the page fault exception queue, performing page fault handling based on the page fault message to obtain the missing memory page, and sending a processing completion instruction for the missing memory page to the page fault request handling device comprises:
obtaining, by the virtual machine manager, the at least two page fault messages from the page fault exception queue, performing, by the virtual machine manager, page fault handling based on the at least two page fault messages to obtain at least two missing memory pages, and sending, by the virtual machine manager, the processing completion instruction for the at least two missing memory pages to the page fault request handling device.

9. The memory page fault handling method according to claim 8, wherein the page fault handling system comprises: the at least two virtual machines;
correspondingly, updating the state table based on the processing completion instruction, so that the data processing device performs the I/O access operation according to the updated state table comprises:
updating, by the page fault request handling device, at least two state tables based on the processing completion instruction, so that the data processing device performs at least two I/O access operations according to at least two updated state tables, wherein the state tables comprise present states of the at least two missing memory pages.

10. The memory page fault handling method according to claim 9, wherein the page fault request handling device comprises a page fault request handling interface; and
correspondingly, updating the at least two state tables based on the processing completion instruction, so that the data processing device performs the at least two I/O access operations according to the at least two updated state tables comprises:
updating, by the page fault request handling device, the at least two state tables based on the processing completion instruction, and sending, by the page fault request handling device, at least two update completion instructions for the at least two updated state tables to the data processing device using the page fault request handling interface; and
performing, by the data processing device in response to the at least two update completion instructions, the at least two I/O access operations according to the at least two updated state tables.

11. The memory page fault handling method according to claim 1, wherein sending the page fault message to the page fault exception queue based on the page fault request comprises:
sending, by the page fault request handling device, the page fault message to the page fault exception queue in a shared memory of the host based on the page fault request.

12. A memory page fault handling system, comprising:
a data processing device, configured to send a page fault request to a page fault request handling device in response to determining that a memory page fault corresponding to an I/O access sent by a virtual machine occurs;
the page fault request handling device, configured to send a page fault message to a page fault exception queue based on the page fault request; and
a virtual machine manager, configured to obtain the page fault message from the page fault exception queue, perform page fault handling based on the page fault message to obtain a missing memory page, and send a processing completion instruction for the missing memory page to the page fault request handling device;
the page fault request handling device, configured to update a state table based on the processing completion instruction, so that the data processing device performs an I/O access operation according to an updated state table, wherein the state table comprises a present state of the missing memory page.

13. A page fault request handling device, comprising a page fault message sending module and a state table update module;
the page fault message sending module, configured to send a page fault message to a page fault exception queue based on a page fault request, wherein the page fault message is sent by a data processing device when the data processing device determines that a memory page fault corresponding to an I/O access sent by a virtual machine occurs; and
the state table update module, configured to update a state table based on a processing completion instruction, so that the data processing device performs an I/O access operation according to an updated state table, wherein the processing completion instruction is sent when a virtual machine manager obtains the page fault message from the page fault exception queue and performs page fault handling based on the page fault message to obtain a missing memory page, and the state table comprises a present state of the missing memory page.

14. A computing device, comprising:
a memory and a processor;
wherein the memory is configured to store computer-executable instructions, and the processor is configured to execute the computer-executable instructions; and
the computer-executable instructions, when executed by the processor, implement the steps of a target object determining method as claimed in any one of claims 1 to 11.
